# EUROPÄISCHE PATENTANMELDUNG

(11) **EP 2 157 145 A1**
(43) Veröffentlichungstag der Anmeldung: **24.02.2010**
(21) Anmeldenummer: 09164296.7
(22) Anmeldetag: 01.07.2009
(51) Int. Cl.: C09J 7/02

(54) **Verfahren und Verwendung von Klebestreifen zur Abdeckung oder Versiegelung optisch hochwertiger Oberflächen**

(30) Priorität: 16.07.2008 DE 102008033322
(71) Anmelder: TESA SE, 20253 Hamburg (DE)
(72) Erfinder: Escudero Vallejo, Aranzazu, 22055, Hamburg (DE); Dollase, Thilo Dr., 22397, Hamburg (DE); Böhm, Nicolai Dr., 22559, Hamburg (DE); Portmann, Michael, 20359, Hamburg (DE)

(57) **Zusammenfassung**

Die vorliegende Erfindung betrifft ein Verfahren zur Abdeckung oder Versiegelung optisch hochwertiger Oberflächen, bei dem ein Klebestreifen mittels einer Klebeschicht auf der optisch hochwertigen Klebefläche festgelegt wird, wobei der Klebestreifen rückstandsfrei von der Oberfläche ablösbar ist. Es wird vorgeschlagen, dass der Klebestreifen durch Verstreckung unter einem Winkel von kleiner 25° von der Oberfläche abgelöst wird, so dass im Wesentlichen kein Ghosting-Effekt auf der Oberfläche auftritt.

## Beschreibung

Die Erfindung betrifft ein Verfahren zur Abdeckung oder Versiegelung optisch hochwertiger Oberflächen, wie zum Beispiel lackierten Oberflächen, gemäß dem Oberbegriff von Anspruch 1.

Klebestreifen in der Form von Sicherheitsetiketten werden üblicherweise dazu verwendet, die Erstöffnung eines mit dem Sicherheitsetikett gekennzeichneten Gegenstandes, wie einer Tür oder eines Behälters, anzuzeigen. Dazu weisen derartige Sicherheitsetiketten ein optisches Merkmal auf, das einen Öffnungsversuch, wie ein Ablösen von dem mit dem Sicherheitsetikett versehenen Gegenstand, irreversibel anzeigt. Die Sicherheitsetiketten dienen insofern als Siegel für die Unversehrtheit des Gegenstandes vor Erstöffnung. Das Sicherheitsetikett wird hierzu auf den Gegenstand derart aufgeklebt, dass dieser ohne ein Ablösen oder Zerschneiden des Sicherheitsetiketts nicht geöffnet werden kann. Hierzu muss das Sicherheitsetikett derart mit dem Gegenstand verbunden sein, dass ein Ablösen und anschließendes Wiederaufbringen nicht ohne sichtbare Beeinträchtigungen möglich ist. Dies wird üblicherweise durch eine geeignete Klebeverbindung mit dem Gegenstand in Kombination mit einem optischen Merkmal erreicht.

Neben Verpackungen und Behältern jedweder Art stellen auch Türen und Tore sowie alle bekannten Verschlüsse von Öffnungen Objekte dar, für die eine Versiegelung erforderlich sein kann. Dabei kann zwischen solchen Siegelanwendungen unterschieden werden, bei denen es gewünscht ist, dass auf dem zu versiegelnden Objekt nach Bruch des Siegels ein Rückstand verbleibt, und solchen, bei denen eine rückstandsfreie Entfernung des Siegels angestrebt ist.

Übliche Siegel, die rückstandsfrei wiederablösbar sind, enthalten einen Träger und eine reversibel klebende Klebmasse. Der Träger wird bei einem Ablöseversuch derartig geschädigt, dass er, nicht ohne dies zu erkennen, wieder in seine ursprüngliche Position verklebt werden kann. Zwar wird der Träger beim Ablösen geschädigt, jedoch bietet er ausreichende Festigkeit, so dass das Etikett rückstandsfrei durch Abschälen vom Klebuntergrund abgelöst werden kann. Hierzu können auch mehrere Ansätze zum Ablösen erforderlich sein, wenn nämlich das Etikett an einer Stelle während des Ablösens einreißt.

Versiegelungen optisch hochwertiger Oberflächen sind beispielsweise gewünscht im Bereich neuer oder neuwertiger Automobile. Dort soll häufig der unautorisierte Zugang zum Kraftfahrzeuginnenraum durch Versiegelung der Türen verhindert werden. Das Siegel wird dazu über den Öffnungsspalt hinweg verklebt und zu einem späteren Zeitpunkt von einer autorisierten Person wieder abgelöst. Die Verklebung erfolgt in diesem Beispiel auf einer (frisch) lackierten Fläche. Dabei ist es verständlich, dass besonders hohe Anforderungen an die Rückstandsfreiheit nach dem Ablösen existieren. Aus anderen Anwendungen, bei denen temporär selbstklebende Produkte auf optisch hochwertige Oberflächen wie insbesondere lackierte Kraftfahrzeugteile aufgebracht werden, sind diese außergewöhnlichen Anforderung bekannt und es wurden hierfür spezielle Lösungen geschaffen (EP 1 326 937 B1; US 5,492,750 A; US 6,579,601 B2; WO 96/37568 A1; WO 98/47977 A1). Dabei wurden u. a. Konzepte offenbart, mittels derer ein Phänomen, das bei der Verklebung auf optisch hochwertigen Oberflächen auftreten kann, das so genannte "Ghosting", minimiert werden kann. Unter ,,Ghosting" oder auch ,,Geisterbild" bezeichnet man in diesem Zusammenhang typischerweise dünnste Beläge oder Ablagerungen auf einer Oberfläche, die zu mit dem Auge erkennbaren optischen Veränderungen der Oberfläche führen. Diese Beläge oder Ablagerungen sind hervorgerufen durch ein zuvor mit der Oberfläche in Kontakt befindlich gewesenes Abdeckmaterial. Die Beläge sind dabei oftmals nicht einmal abwischbar. Weitere Details zum Phänomen des ,,Ghosting" werden in der US 2002/098353 A1 beschrieben. Bei der Verklebung auf lackierten Oberflächen ist zudem eine Deformation der Oberflächen unerwünscht. Deformationen sind visuell erkennbare Veränderungen einer Lackoberfläche, die entstehen, wenn der frische, nicht vollflächig ausgehärtete Lack mit einer ungeeigneten Schutzfolie abgedeckt wird. Solche Deformationen können durch Abdrücke entstehen und im kompletten Bereich der Verklebung oder nur im Bereich der Verklebungskanten auftreten. Erkennbar sind solche Deformationen beispielsweise als Mattierung, wie es die DE 100 63 661 A1 darlegt und gleichzeitig einen Weg vorschlägt, dieses Problem zu lösen.

In den oben genannten Dokumenten werden Klebeanwendungen im Bereich des Oberflächenschutzes und der Oberflächenmaskierung diskutiert. Sie führen die Schwierigkeiten vor Augen, denen der Anwender bei der Auswahl geeigneter Klebesysteme für die Verklebung auf optisch hochwertigen Oberflächen gegenübersteht.

Aber auch für Sicherheitssiegel wurde ein Konzept vorgeschlagen, um die außergewöhnlich hohen Anforderungen an die Verklebung oder vielmehr an das Ablösen von Sicherheitssiegeln zwar nicht zu lösen aber zumindest zu umgehen. Das in der US 5,399,405 A offenbarte Konzept bedient sich eines Siegels, das auf der Innenseite des Automobils befestigt wird, aber dennoch von außen erkennbar und damit überprüfbar ist.

Sicherheitssiegel, die einerseits Manipulation anzeigen und rückstandsfrei wiederablösbar sind, sind an sich ebenfalls bekannt. Für diese Anforderungskombination wurden in US 6,372,341 B1, DE 10 2007 007 413 und DE 10 2008 013 690 Konzepte vorgeschlagen, die ein vergleichsweise leicht dehnbares aber mit hoher Reißfestigkeit ausgestattetes Trägermaterial enthalten, so dass beim Ablösevorgang eine Verformung eintritt. Diese Verformung zeigt den Ablöse- oder Manipulationsversuch an. Durch Verstrecken sind solche Etiketten rückstandsfrei ablösbar. Weitere Beispiele für Etiketten, die für einen Einsatz in diesem Anwendungsbereich denkbar sind, lehren WO 2004/013829 A1 und WO 2003/007279 A1.

Der vorliegenden Erfindung liegt das Problem zugrunde, hochwertige Oberflächen verlässlich abzudecken und/oder zu versiegeln, dabei aber andererseits auch einen hohen Bedienungskomfort zu ermöglichen.

Die vorliegende Erfindung löst das zuvor beschriebene Problem bei einem Verfahren mit den Merkmalen des Oberbegriffs von Anspruch 1 durch die Merkmale des kennzeichnenden Teils von Anspruch 1. Eine nebengeordnete Lösung zeigt die Verwendung gemäß Anspruch 7. Vorteilhafte Ausgestaltungen und Weiterbildungen sind Gegenstand der jeweiligen Unteransprüche.

Gesucht sind also insbesondere Siegel, die verlässlich Manipulationsversuche anzeigen, gleichzeitig aber rückstandsfrei wiederablösbar und außerdem einfach in der Verwendung sind, wobei letzteres durch direkte Verklebung an der gewünschten Stelle oder Überklebung der zu versiegelnden Öffnung von außen also auf der optisch hochwertigen Oberfläche geschieht.

Überraschenderweise wurde nun gefunden, dass Klebestreifen, die durch Verstrecken vom Untergrund rückstandsfrei ablösbar sind, nicht nur keine Rückstände zurücklassen sondern sich darüber hinaus sogar Ghosting-frei ablösen lassen, sofern man diese Klebestreifen durch Verstreckung in einer Richtung, die im Wesentlichen mit der Verklebungsfläche coplanar ist, ablöst.

Als Klebestreifen werden vorliegend alle Arten von klebenden Artikeln, insbesondere (Sicherheits-)Etiketten, (Sicherheits-)Klebebänder sowie auch Klebefolien bezeichnet. Klebestreifen zur Abdeckung oder Versiegelung optisch hochwertiger Oberflächen unter Vermeidung von Ghosting-Effekten enthalten zumindest eine Klebeschicht, mittels derer sie auf einer zu versiegelnden Oberfläche festgelegt werden können. Bei dieser Klebeschicht handelt es sich insbesondere um eine Haftklebeschicht. Insbesondere weist der Klebestreifen einen Träger auf, der eine hinreichende Stabilität des Klebestreifens bei der Verstreckung gewährleistet.

Zum Aufbau der Haftklebeschicht sind typischerweise alle dem Fachmann bekannten Haftklebemassen bekannt, die sich durch Verstreckung rückstandsfrei von einem Klebuntergrund wiederablösen lassen. Es ist selbstverständlich auch denkbar, als Haftklebemassen solche einzusetzen, die auch durch Abschälen rückstands- und Ghosting-frei von der optisch hochwertigen Oberfläche wieder ablösbar sind. Es sind eine Reihe von Haftklebemassearten im Hinblick auf ihre Tauglichkeit zur Verklebung auf optisch hochwertigen Oberflächen, insbesondere lackierten Oberflächen untersucht worden. Die DE 100 63 661 A1 diskutiert einige von ihnen im Hinblick auf Ghosting-Effekte oder Lackdeformationen, die nach dem Wiederablösen erkennbar sind. Der Fachmann wählt für reversible Klebeanwendungen auf optisch hochwertigen Oberflächen gängigerweise folgende Klebesysteme aus: Isobutylen-basierende (WO 98/47977 A1), Polyhexen-basierende (WO 96/37568 A1), Olefinkautschuk-basierende (DE 197 42 805 A1), Ethylenvinylacetat-basierende (DE 195 32 220 A1), Polyurethan-basierende (DE 100 63 661, A1) solche basierend auf hydrierten Styrolblockcopolymeren (JP 08 027 444 A) sowie Acrylat-basierende (US 5,612,136 A). Bei den meisten dieser Haftklebemassearten handelt es sich aber eher um Spezialitäten, die vergleichbar hochpreisige Rohstoffe und/oder anspruchsvolle Beschichtungsverfahren erfordern. Alle diese Systeme sind erforderlich, um Ghosting oder Deformationen bei der temporären Verklebung auf optisch hochwertigen Oberflächen zu vermeiden, wenn das Ablösen durch einen Schälvorgang erfolgt, wie es für diese Systeme basierend auf nur geringfügig dehnbaren Trägermaterialien typisch ist.

Die für das vorliegende Verfahren zur Versiegelung optisch hochwertiger Oberflächen verwendeten Klebestreifen sind aber so gestaltet, dass sie eine maximale Dehnung von bevorzugt mindestens 250 %, weiter bevorzugt mindestens 500 % aufweisen, jedenfalls ausreichend dehnbar sind, dass sie durch Verstrecken (Strippen) im Wesentlichen rückstandsfrei und zerstörungsfrei von der Verklebungsoberfläche wieder abgelöst werden können. Es wurde nun gefunden, dass bei Verfahren, die als Ablösemechanismus das Ablösen unter Verstreckung nutzen, statt des Ablösens durch einen Schälvorgang nicht zwingend die zuvor genannten speziellen Klebemassen zum Einsatz kommen brauchen, um Ghosting oder Deformation zu verhindern. Vielmehr können auch Standardklebemassen wie insbesondere solche basierend auf Kautschuken und zwar einschließlich und bevorzugt ungesättigten Kautschuken verwendet werden.

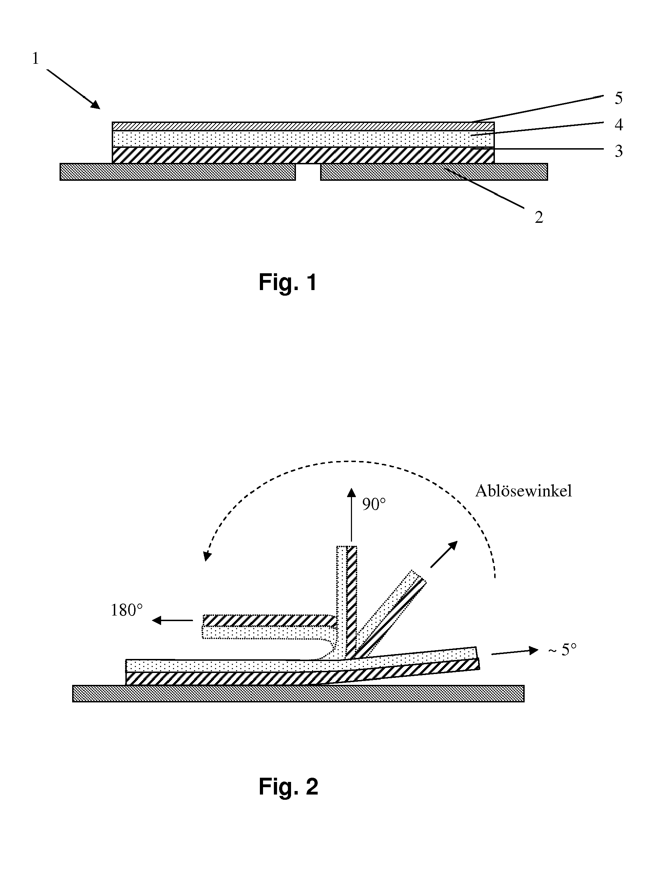

Unter dem Ablösen durch einen Schälvorgang ist vorliegend ein Ablösen des Klebestreifens unter einem Winkel von typischerweise größer als 25° zu verstehen. Gängige Abzugswinkel sind vor allem 90 °, 135° und 180° (siehe erläuternd Fig. 2). Dieser Ablöseprozess stellt den Stand der Technik dar und führt bei den bekannten Systemen zu den unerwünschten Ghosting-Effekten.

Unter Ablösen durch Verstreckung (Strippen) ist demgegenüber vorliegend ein Ablösen des Klebestreifens unter einem Winkel von kleiner als 25°, insbesondere von kleiner als 10° und ganz besonders von kleiner als 5° zu verstehen (siehe erläuternd Fig 2). Dieser Ablöseprozess ist entscheidend für die Vermeidung des Ghostings beim Ablösen von Klebestreifen von optisch hochwertigen Oberflächen.

Haftklebemassen, aus denen der Anwender zur Realisierung von Klebestreifen für das Verfahren zur Versiegelung oder Abdeckung optisch hochwertiger Oberflächen auswählen kann, sind prinzipiell alle dem Fachmann bekannten Haftklebemassen, die durch Verstrecken im Wesentlichen rückstandsfrei und zerstörungsfrei von einer Verklebungsoberfläche wiederabgelöst werden können. Es bieten sich insbesondere solche basierend auf Kautschuken an.

Bei Naturkautschuk oder Synthesekautschuk als Ausgangsmaterial für die Haftklebemasse sind eine Reihe von Variationsmöglichkeiten gegeben, sei es aus der Gruppe der Naturkautschuke oder der Synthesekautschuke oder sei es aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR) und der halogenierten Butyl-Kautschuke (XIIR) und/oder deren Verschnitten gewählt werden können.

Weiterhin können Kautschuken zur Verbesserung der Verarbeitbarkeit vorzugsweise thermoplastische Elastomere mit einem Gewichtsanteil von 10 bis 50 Gew.-% bezogen auf den Gesamtelastomeranteil zugesetzt werden. Stellvertretend seien an dieser Stelle vor allem die besonders verträglichen Typen Polystyrol-Polyisopren-Polystyrol (SIS) und Polystyrol-Polybutadien-Polystyrol (SBS) genannt.

Ebenfalls vorteilhaft einsetzbar als Grundmaterialien für geeignete Klebeschichten sind Blockcopolymere. Dabei sind einzelne Polymerblöcke kovalent miteinander verknüpft. Die Blockverknüpfung kann in einer linearen Form vorliegen, aber auch in einer sternförmigen Form oder Pfropfcopolymervariante. Ein Beispiel für ein vorteilhaft einsatzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock eine Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran; Polydiene, wie zum Beispiel Polybutadien oder Polyisopren; hydrierte Polydiene, wie zum Beispiel Polyethylenbutylen oder Polyethylenpropylen; Polyester, wie zum Beispiel Polyethylenterephthalat, Polybutandioladipat oder Polyhexandioladipat; Polycarbonat; Polycaprolacton; Polymerblöcke vinylaromatischer Monomere, wie zum Beispiel Polystyrol oder Poly-α-Methylstyrol; Polyalkylvinylether; Polyvinylacetat; Polymerblöcke α,β-ungesättigter Ester wie insbesondere Acrylate oder Methacrylate. Dem Fachmann sind entsprechende Erweichungstemperaturen bekannt. Alternativ schlägt er sie beispielsweise im Polymer Handbook (J. Brandrup, E.H. Immergut, E.A. Grulke (Hrsg.), Polymer Handbook, 4. Aufl. 1999, Wiley, New York) nach. Polymerblöcke können aus Copolymeren aufgebaut sein.

Als optional einsetzbare klebrigmachende Harze sind an sich ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als ebenfalls optional einsetzbare Weichmacher können an sich alle aus der Selbstklebetechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

Auch wenn hier Haftklebemassen basierend auf Kautschuken primär als geeignete Klebemassen aufgeführt sind, so eignen sich dennoch auch andere Haftklebemassen, insbesondere nämlich solche, die zwar zum Wiederablösen geeignet sind, beim Ablösen über einen Schälvorgang jedoch Ghosting-Effekte oder Deformationen hervorrufen.

Es sei darauf hingewiesen, dass Ghosting-Effekte und Deformationen nicht nur von der zum Einsatz kommenden Haftklebemasse hervorgerufen werden sondern aus einem Wechselspiel des eine Klebemasse enthaltenden Klebestreifens mit der Art (insbesondere Chemie) der Verklebungsoberfläche resultieren. Es ist nur verständlich, dass Kombinationen aus Art der Verklebungsoberfläche und Klebemasse existieren, die ungünstig für das beschriebene Verfahren sind. Der Fachmann kann sich über einen Test aber schnell ein Bild über die Tauglichkeit einer gewählten Kombination bestehend aus einer gegebenen Verklebungsoberflächenart und einer Klebemasse machen.

In jedem Fall wird durch das beschriebene Verfahren sowie die entsprechende Verwendung eines Klebestreifens der Kreis der für die Abdeckung oder Versiegelung optisch hochwertiger Oberflächen entsprechend dieser Beschreibung zum Einsatz kommenden Klebemassearten über die bisher bekannten hinaus erweitert. Für den Anwender ergibt sich daraus der Vorteil, dass die Wahrscheinlichkeit, eine geeignete Klebemasse zu finden, die dem in seinem Umfeld verarbeiteten Rohstoffportfolio und/oder seiner zur Verfügung stehenden Verarbeitungstechnologie entspricht, steigt und somit eine bessere und einfachere Anpassungsmöglichkeit geschaffen wird.

Als weiterer Vorteil des erfindungsgemäßen Verfahrens sowie der erfindungsgemäßen Verwendung von Klebestreifen stellt sich die Möglichkeit dar, auch klebstärkere Klebemassearten auszuwählen als es bei reversibel klebenden Systemen mit nur geringfügig dehnbaren Trägermaterialien, die nur durch Abschälen vom Klebuntergrund abgelöst werden können, möglich ist. Obwohl diese klebstärkeren Klebemassearten besser auf der Kleboberfläche haften und entsprechende Klebestreifen damit schwieriger manipulierbar sind, was in der Verwendung als Sicherheitssiegel vorteilhaft ist, oder damit seltener unerwünschterweise zum Beispiel durch Fahrtwind abgelöst werden, was in der Verwendung in Abdeckprozessen vorteilhaft ist, lassen sie sich dennoch durch den erfindungsgemäßen Ablöseprozess unter Verstreckung von der Kleboberfläche ablösen.

Bevorzugt weisen die geeigneten Klebestreifen ein Trägermaterial auf. Dieses kann aus einer Schicht oder aus mehreren Schichten aufgebaut sein. Das Trägermaterial ist bevorzugt dehnbar und weist eine maximale Dehnung von bevorzugt mindestens 250 % und weiter bevorzugt von mindestens 500 % auf. Es kann elastisch sein, also hohes Rückstellvermögen nach der Verstreckung aufweisen, oder inelastisch, also geringes Rückstellvermögen nach Verstreckung aufweisen. Besonders bevorzugt ist eine inelastische Ausgestaltung des Trägers, da die Verstreckung dann zu einer dauerhaften Verformung des Klebestreifens führt, die eine Wiederverwendbarkeit durch die optische Beeinträchtigung nahezu ausschließt. Eine Wiederverwendbarkeit kann aber auch durch andere Arten einer optischen Beeinträchtigung, beispielsweise durch weitere Funktionsschichten des Klebestreifens, erschwert werden.

Beispiele für Rohstoffe, auf denen das dehnbare Trägermaterial basiert, umfassen thermoplastische Polyolefine, Polyvinylchlorid, Polyvinylacetat, Polyurethane, Polyamide, Polystyrole, Polyacrylate, Polyester, Kautschuke (synthetische und natürliche) und Silikone. Bevorzugte Rohstoffe sind Polyolefine wie Ethylenvinylacetat (EVA), Ethylenacrylat (EA), Ethylenmethacrylat (EMA), low density Polyethylen (PE-LD), linear low density Polyethylen (PE-LLD), very low density linear Polyethylen (PE-VLD), Polypropylen Homopolymer (PP-H), Polypropylen Copolymer (PP-C) (impact oder random). Weitere Beispiele für Rohstoffe, aus denen das dehnbare Trägermaterial aufgebaut sein kann, umfassen thermoplastische Elastomere auf Basis von Polyolefinen TPO, Polyamiden TPA, Polyurethanen TPU, Styrolblockcopolymeren TPS und Polyestern TPC. Bevorzugte Rohstoffe sind Polyolefincopolymere wie EthylenVinylacetat EVA, Ethylenacrylat EA, weiche Polyethylenelastomere wie Affinity™, Engage™, Exact™, Tafmer™, weiche Polypropylencopolymere wie Vistamaxx™, Versify™ welche durch Random-Struktur einen niedrigen Schmelzpunkt aufweisen, und elastomere heterophasige Polyolefine (zum Beispiel mit Blockstruktur) wie Infuse™, Hifax™, Adflex™ oder Softell™. Beispiele für Styrolelastomere sind Kraton™, Hybrar™, Septon™, Carifiex™, Vector™ und Styroflex™.

Das Trägermaterial kann auch in seiner Gänze oder, sofern es aus mehreren Einzelschichten aufgebaut ist, auch in einzelnen oder mehreren Schichten geschäumt sein.

Die zur Anwendung kommenden Klebestreifen können zudem optional eine oder mehrere weitere Schichten aufweisen, die ein oder mehrere optische Merkmale zur Anzeige der Authentizität des Siegels und/oder einer etwaigen Manipulation, beispielsweise durch eine Änderung des Erscheinungsbilds unter Verstreckung enthalten. Bei einer derartigen Schicht kann es sich um die oberste Schicht im Etikettenverbund handeln. Es ist auch denkbar, dass eine solche Schicht zwischen zwei die Trägerschicht bildende Schichten eingearbeitet wird oder zwischen Träger und Klebschicht. Sie kann als Bedruckung, auch als Mehrfachbedruckung, wobei einzelne Druckelemente vollflächig und andere partiell ausgestaltet sein können, oder als Prägefolie wie zum Beispiel eine Heißprägefolie realisiert sein. Optische Merkmale, die unter Verstreckung ihr Erscheinungsbild ändern, können auch in verschiedenen Schichten in das Sicherheitssiegel eingebracht sein. Es ist auch möglich, dass sich ein optisches Merkmal aus in unterschiedlichen Schichten befindlichen Einzelmerkmalen zusammensetzt. Bezüglich weiterer möglicher optischer Merkmale und Effekte wird auch auf die DE 10 2007 007 413 und DE 10 2008 013 690 verwiesen.

Weiter kann das Sicherheitssiegel so ausgebildet sein, dass es eine Speicherschicht aufweist, in die Information einbringbar ist. Bei der Speicherschicht kann es sich um eine zusätzliche Schicht handeln. Die Speicherschicht kann beispielsweise durch eine weitere Schicht, wie eine Trägerschicht des Sicherheitsetiketts gebildet werden. Die Einbringung der Information kann beispielsweise durch Bedruckung der Speicherschicht, Prägung, Einschreiben mittels eines Lasers oder dergleichen erfolgen. Es sind zudem Bedruckungen durch Inkjet-Verfahren und/oder Thermotransfer möglich.

Optional können weitere Schichten zur Anwendung kommen, die so ausgewählt sein können, dass sie zusätzliche Funktionen in den Klebestreifen einbringen. Beispiele für solche optional einsetzbaren Schichten können Primer-, Trenn- oder Barriereschichten sein. Besonders Primer- und Trennschichten (adhäsionssteuernde Funktionsschichten) können in vollflächiger oder partieller Gestalt zum Einsatz kommen, um die Verankerung benachbarter Schichten wie zum Beispiel Träger und Druckfarbe wunschgemäß einzustellen. Zudem können alleinig oder damit in Kombination auch physikalische Vorbehandlungsverfahren wie Bedampfungen, Coronierung, Beflammung oder Plasmabehandlung zum selben Zweck vorgenommen werden.

Weitere Einzelheiten, Merkmale, Ziele und Vorteile der vorliegenden Erfindung werden nachfolgend anhand einer Zeichnung bevorzugter Ausführungsbeispiele näher erläutert. In der Zeichnung zeigt:
- Fig.1: ein Beispiel für den Aufbau eines Klebestreifens wie er in erfindungsgemäßen Verfahren zur Anwendung kommt,
- Fig. 2: in schematischer Weise den Ablöseprozess eines Klebestreifens von einer Oberfläche unter verschiedenen Winkeln und
- Fig. 3: eine Musterplatte nach Ablösung der Klebestreifen nach dem Verfahren des Stands der Technik (Abschälen unter 90° oder 180°) und nach dem erfindungsgemäßen Verfahren (Ablösen durch Verstrecken unter beispielsweise nahezu 0 °).

Fig. 1 zeigt beispielhaft den Aufbau eines Klebestreifens in Form eines Sicherheitssiegels 1, das für das erfindungsgemäße Verfahren einsetzbar ist. Das Sicherheitssiegel 1 ist in der Verwendung auf einen Klebuntergrund 2 aufgebracht. Dieser weist eine optisch hochwertige Oberfläche auf, hier eine lackierte Oberfläche. Der Untergrund 2 ist in diesem Fall als zweigliedriges Objekt angedeutet und stellt damit die Versiegelungsanwendung einer Öffnung also beispielsweise einer Tür oder Klappe dar. Das Sicherheitssiegel 1 kann aber auch so verwendet werden, dass es nicht über einen Spalt hinweg verklebt wird, sondern auf einer durchgehenden Fläche. Das dargestellte Sicherheitssiegel 1 besteht aus einer Klebeschicht 3, einer Trägerschicht 4 und einer Bedruckung 5.

Klebestreifen in Form von wiederablösbaren Sicherheitssiegeln, Maskier- oder Schutzklebebändern/-folien werden nach dem Stand der Technik üblicherweise durch Abschälen vom Verklebungsuntergrund abgelöst. Dies erfolgt dann im Allgemeinen unter einem Ablösewinkel von größer als 25° eher sogar unter einem Winkel von 90° oder sogar 180°, wie es in Fig. 2 gezeigt ist. Im Gegensatz zum herkömmlichen Ablöseprozess bedient man sich im vorliegend beschriebenen Verfahren beim Ablösen des Klebestreifens unter Verstreckung einem Ablösewinkel von kleiner als 25°. Besonders geeignet sind noch kleinere Ablösewinkel, insbesondere ein Winkel als 10° und weiter bevorzugt von weniger als 5°.

### Beispiel:

Es wurde ein Klebestreifen in einer Ausgestaltung gemäß der DE 10 2007 007 413 bestehend aus einer 35 g/m² Haftklebeschicht und einem 50 µm dicken Trägermaterial im Format 22 mm (Höhe) x 99 mm (Breite) verwendet. Die Haftklebemasse basierte auf einem ungesättigten Synthesekautschuk. Sie enthielt 30 % eines Polyterpenharzes. Das Trägermaterial basierte ebenfalls auf einem Synthesekautschuk. Die Klebemassenschicht war zunächst mit einem Silikonliner eingedeckt. Das Material wurde vollflächig gelb und mit schrägen schwarzen Linien bedruckt. Letztere dienen zur besseren Erkennbarkeit eines Manipulationsversuchs, da sich ihre Orientierung und Geradlinigkeit unter Deformation auf leicht sichtbare Weise ändert. Aus der Materialbahn wurden Etiketten oben genannten Formats ausgestanzt.

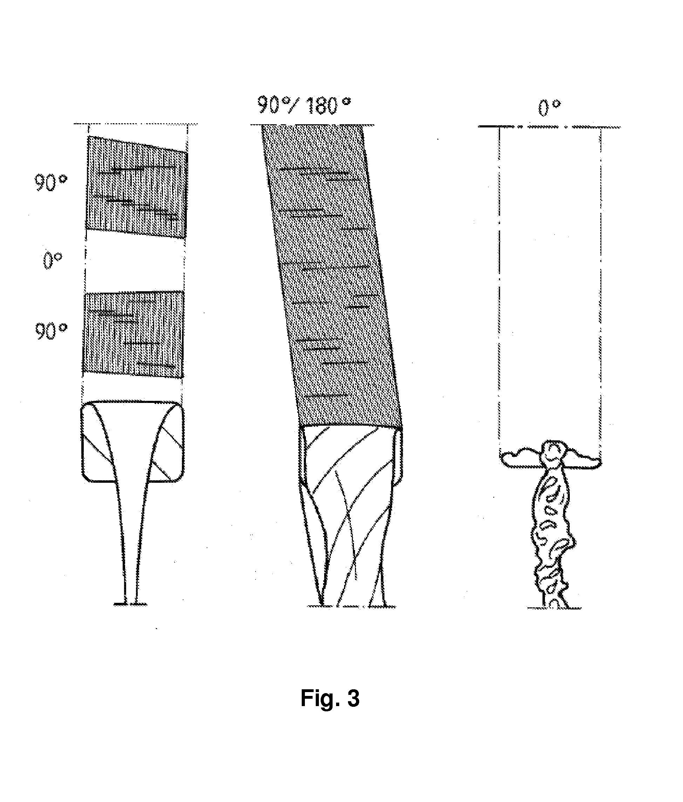

Die Klebestreifen wurden unter Entfernung des Silikonliners auf Musterplatten, die zuvor mit drei verschiedenen Automobillacken ausgerüstet worden waren, manuell verklebt. Die verklebten Muster wurden für sieben Tage bei 80 °C in einem Umlufttrockenschrank gelagert. Im Anschluss an die Lagerung wurden die Klebestreifen unter einem Winkel von 90° und 180° (Stand der Technik) abgeschält bzw. unter einem Winkel von nahezu 0° (erfindungsgemäß) durch Verstrecken abgelöst. Die Musterplatten wurden daraufhin im Hinblick auf Klebmasserückstände und ihr optisches Erscheinungsbild (Ghosting, Deformationen) untersucht. Die Ergebnisse sind in der nachfolgenden Tabelle 1 zusammengefasst. Die Resultate der Ablöseversuche sind zudem in Fig. 3 wiedergegeben.

**- Tabelle 1 -**

| **Lacktyp** | **Ablösewinkel** | **Ghosting / Deformationen erkennbar** |
|---|---|---|
| 1K PU-Karosserielack | 0° | Nein / Nein |
| | 90° | Ja / Nein |
| | 180° | Ja / Nein |
| 2K PU-Karosserielack | 0° | Nein / ja, leichte Deformation an der Kante |
| | 90° | Ja / ja, leichte Deformation an der Kante |
| | 180° | Ja / ja, leichte Deformation an der Kante |
| 2K Kunststofflack für Kunststoff-automobilanbauteile | 0° | Nein / Nein |
| | 90° | Ja / Nein |
| | 180° | ja / Nein |

Tabelle 1 zeigt, dass Ghosting beim Ablösen unter einem Winkel von 0° durch Verstrecken der Klebestreifen, also über das erfindungsgemäße Verfahren, verhindert werden kann, während Ablösen durch Abschälen (unter einem Winkel von 90° und 180°) nach dem Stand der Technik zu Ghosting-Effekten führt. Zudem wurden auf den untersuchten Lacken über das erfindungsgemäße Verfahren beim Ablösen der Klebestreifen Verbesserungen im Bezug auf Lackdeformationen gefunden.

Über die hier genannten Anwendungen zur Versiegelung optisch hochwertiger Oberflächen hinaus sind die genannten durch Verstrecken ablösbaren Klebeprodukte auch als Siegel, Emblem, Plakette, Prüfmarke und dergleichen einsetzbar, also als Aufkleber insbesondere für optisch hochwertige Oberflächen, bei dem die Kombination aus Manipulationssicherheit und rückstandsfreier und darüber hinaus auch Ghostingfreier Wiederablösbarkeit als Anforderung besteht. Der erfinderische Gedanke umfassend Verfahren zur Versiegelung optisch hochwertiger Oberflächen über durch Verstrecken rückstandsfrei und zerstörungsfrei wiederablösbare Klebestreifen bzw. die Verwendung von durch Verstrecken rückstandsfrei und zerstörungsfrei ablösbarer Klebestreifen zur Versiegelung optisch hochwertiger Oberflächen erstreckt sich also insbesondere auf Anwendungen im Sicherheitsbereich.

Darüber hinaus sind aber auch Verfahren erfindungsgemäß, bei denen optisch hochwertige Oberflächen durch Abdeckmaterialien insbesondere temporär geschützt werden. Hier sind als bevorzugte Beispiele die Verwendung von Abdeckfolien zum Schutz optisch hochwertiger Oberflächen wie insbesondere lackierte Flächen oder Glasflächen neuer Automobile während des Transports zu nennen aber auch Anwendungen im Lackierprozess, bei dem bestimmte Bereiche des zu lackierenden Guts unlackiert bleiben sollen und daher mit einem Maskiermaterial temporär geschützt werden. Der erfinderische Gedanke erstreckt sich also auch auf Anwendungen im Bereich Oberflächenschutz. Die erfindungsgemäßen Verfahren, die in diesem Bereich zur Anwendung kommen, umfassen die Nutzung von Klebestreifen, die durch Verstrecken von der Verklebungsoberfläche wieder abgelöst werden, als Befestigungselemente von Folien, die die eigentliche Abdeckfunktion übernehmen. Diese Folien tragen entsprechend dieser Erfindung also keine Klebemasse. Vielmehr werden Klebestreifen, die entsprechend der zuvor gemachten Aussagen konzipiert sind - insbesondere als in Form von Klebestreifen mit einer Klebeschicht auf der Ober- und Unterseite -, genutzt, um die Abdeckfolien insbesondere durch bereichsweises Überkleben ihrer Schnittkanten an dem zu schützenden Gegenstand festzulegen. Sobald die Abdeckfolie ihre Aufgabe erfüllt hat, können die Klebestreifen durch Verstrecken rückstandsfrei, zerstörungsfrei und darüber hinaus Ghosting-frei wieder abgelöst werden.

Es ist bekannt, dass eine weitere Anforderung in der erfindungsgemäßen Verwendung von Klebestreifen zur Festlegung von Abdeckfolien auf zu lackierenden Oberflächen in Lackierprozessen existiert. Und zwar werden die Abdeckfolien und etwaigen Befestigungselemente in Lackierprozessen typischerweise überlackiert. Beim Ablösen der Abdeckfolien und etwaiger Befestigungselemente muss daher sichergestellt werden, dass ein an sich brüchiger (spröder) Lack sich nicht in Form kleiner Bruchstücke von der Abdeckfolie und etwaiger Klebestreifen ablöst. Genau diese Gefahr besteht aber bei Klebestreifen entsprechend erfindungsgemäßer Verfahren, die durch Verstrecken vom Klebuntergrund abgelöst werden. Während des Verstreckens kann der Lack von der Klebstreifenoberfläche unkontrolliert absplittern und zu Verschmutzungen im Arbeitsbereich führen. Dies kann jedoch erfolgreich umgangen werden, wenn der Klebestreifen auf seiner Oberseite mit einer trennend wirkenden Schicht - Trennschicht - ausgerüstet ist. Der Lack haftet dann auf dem Klebestreifen nicht und kann nach Härtung in einem Stück abgenommen werden. Als Material für eine Trennschicht eignen sich grundsätzlich alle dem Fachmann bekannten Materialien, die eine die Adhäsion herabsetzende Wirkung haben, wie sie beispielsweise auch für Release-Liner eingesetzt werden.

## Patentansprüche

1. Verfahren zur Abdeckung oder Versiegelung optisch hochwertiger Oberflächen, bei dem ein Klebestreifen mittels einer Klebeschicht auf der optisch hochwertigen Klebefläche festgelegt wird, wobei der Klebestreifen im Wesentlichen rückstandsfrei von der Oberfläche ablösbar ist,
**dadurch gekennzeichnet,**
**dass** der Klebestreifen durch Verstreckung unter einem Winkel von kleiner 25° von der Oberfläche abgelöst wird, so dass im Wesentlichen kein Ghosting-Effekt auf der Oberfläche auftritt.

2. Verfahren nach Anspruch 1, **dadurch gekennzeichnet,**
**dass** der Klebestreifen durch Verstreckung unter einem Winkel von kleiner 10°, vorzugsweise kleiner 5°, von der Oberfläche abgelöst wird.

3. Verfahren nach Anspruch 1 oder 2, **dadurch gekennzeichnet,**
**dass** der Klebestreifen nach Verstreckung eine optische Beeinträchtigung zeigt.

4. Verfahren nach Anspruch 3, **dadurch gekennzeichnet,**
**dass** der Klebestreifen einen Träger aufweist, der nach der Verstreckung verformt ist.

5. Verfahren nach einem der vorhergehenden Ansprüche, **dadurch gekennzeichnet,**
**dass** der Klebestreifen mittels einer Haftklebeschicht, insbesondere basierend auf Kautschuken, auf der Oberfläche festgelegt wird.

6. Verfahren nach einem der vorhergehenden Ansprüche, **dadurch gekennzeichnet,**
**dass** der Klebestreifen als einseitiger oder doppelseitiger Klebestreifen ausgebildet wird, vorzugsweise, dass eine Schutzfolie mittels Klebestreifen auf der Oberfläche zur temporären Abdeckung angeordnet wird.

7. Verwendung eines Klebestreifens zur Abdeckung oder Versiegelung optisch hochwertiger Oberflächen unter Vermeidung von Ghosting-Effekten, insbesondere gemäß einem Verfahren nach einem der Ansprüche 1 bis 6,
wobei der Klebestreifen eine Klebeschicht sowie einen Träger aufweist und wobei der Klebestreifen rückstandsfrei von der Oberfläche ablösbar ist,
**dadurch gekennzeichnet,**
**dass** der Klebestreifen durch Verstreckung unter einem Winkel von kleiner 25° von der Oberfläche ablösbar ist, so dass im Wesentlichen kein Ghosting-Effekt auf der Oberfläche auftritt.

8. Verwendung nach Anspruch 7, **dadurch gekennzeichnet,**
**dass** die Klebeschicht als Haftklebeschicht ausgebildet ist, insbesondere basierend auf Kautschuken.

9. Verwendung nach Anspruch 7 oder 8, **dadurch gekennzeichnet,**
**dass** der Träger dehnbar ist, vorzugsweise, dass der Träger eine maximale Dehnbarkeit von mindestens 250 %, weiter vorzugsweise von mindestens 500 %, aufweist.

10. Verwendung nach einem der Ansprüche 7 bis 9, **dadurch gekennzeichnet,**
**dass** der Klebestreifen derart ausgebildet ist, dass er nach Verstreckung eine optische Beeinträchtigung zeigt.

11. Verwendung nach einem der Ansprüche 7 bis 10, **dadurch gekennzeichnet,**
**dass** der Klebestreifen eine oder mehrere weitere Schichten, insbesondere eine Speicherschicht und/oder eine adhäsionssteuernde Funktionsschicht, aufweist.

12. Verwendung nach einem der Ansprüche 7 bis 11, **dadurch gekennzeichnet,**
**dass** der Klebestreifen an seiner Oberseite eine Trennschicht aufweist.
